Europäisches Patentamt

European Patent Office

Office européen des brevets

(11) Veröffentlichungsnummer: **0 212 460**
**A2**

(12) **EUROPÄISCHE PATENTANMELDUNG**

(21) Anmeldenummer: 86110906.4

(22) Anmeldetag: 07.08.86

(51) Int. Cl.⁴: **B60B 13/00** , F16F 15/32

(30) Priorität: 17.08.85 DE 3529513

(43) Veröffentlichungstag der Anmeldung:
04.03.87 Patentblatt 87/10

(84) Benannte Vertragsstaaten:
AT BE CH DE FR GB IT LI LU NL SE

(71) Anmelder: **Continental Gummi-Werke Aktiengesellschaft**
**Königsworther Platz 1 Postfach 169**
**D-3000 Hannover 1(DE)**

(72) Erfinder: **Klose, Hans-Ulrich**
**Hauptstrasse 15**
**D-3061 Wiedensahl(DE)**

(54) Luftbereiftes Fahrzeugrad mit Ausgleichsgewicht.

(57) Die Erfindung bezieht sich auf ein luftbereiftes Fahrzeugrad mit Ausgleichsgewicht, mit einer starren Felge, die im wesentlichen sich nach radial innen erstreckende Felgenhörner aufweist, und mit einem Fahrzeugluftreifen, der mit seinen Wülsten auf der radial inneren Seite der Felge neben den Felgenhörnern befestigt ist, weiterhin gegebenenfalls mit je einem Abdeckring, der den Raum axial innen von jedem Reifenwulst ausfüllt. Um nach dem Anbringen eines Ausgleichsgewichts ein Eindringen von Schmutz oder Wasser zwischen Reifenwulst und Abdeckring zu verhindern und um ein wirtschaftlicheres Auswuchten zu ermöglichen, wird vorgeschlagen, daß das Ausgleichsgewicht aus Gummi besteht und daß es am Reifenwulst und/oder am Abdeckring befestigt ist.

FIG. 1

## Luftbereiftes Fahrzeugrad mit Ausgleichsgewicht

Die Erfindung betrifft ein luftbereiftes Fahrzeugrad mit Ausgleichsgewicht, mit einer starren Felge, die im wesentlichen sich nach radial innen erstreckende Felgenhörner aufweist, und mit einem Fahrzeugluftreifen, der mit seinen Wülsten auf der radial inneren Seite der Felge neben den Felgenhörnern befestigt ist, weiterhin gegebenenfalls mit je einem Abdeckring, der den Raum axial innen von jedem Reifenwulst ausfüllt.

Ein solches Fahrzeugrad wird z.B. in der DE-OS 33 12 482 beschrieben. Bei dem bekannten Fahrzeugrad wird ein Ausgleichsgewicht in der Weise befestigt, daß sein Verankerungselement in den Schlitz zwischen Reifenwulst und Abdeckring eingetrieben wird. Dies kann jedoch dazu führen, daß in der Nachbarschaft des Verankerungselementes der Gummi des Reifenwulstes oder des Abdeckrings so stark verformt wird, daß Wasser und/oder Schmutz in den Schlitz eindringen kann und unter Umständen bis zum Felgenkranz vordringen kann.

Der Erfindung liegt deshalb die Aufgabe zugrunde, ein Fahrzeugrad mit Ausgleichsgewicht der eingangs genannten Art anzugeben, bei dem das geschilderte Problem nicht auftritt. Eine Teilaufgabe der Erfindung besteht darin, die Verwendung von relativ teurem Metall für das Ausgleichsgewicht und für ein Befestigungselement zu vermeiden.

Diese Aufgabe wird erfindungsgemäß dadurch gelöst, daß das Ausgleichsgewicht aus Gummi besteht und daß es am Reifenwulst und/oder am Abdeckring befestigt ist.

Mit der Erfindung wird zunächst der Vorteil erzielt, daß ein gegenüber Metall billigerer Rohstoff als Ausgleichsgewicht zum Einsatz kommt. Durch die Verwendung von Gummi ergibt sich ein festerer Sitz des Ausgleichsgewichts in der Weise, daß der Gummi aufgrund seiner Elastizität die Dehnungen und Bewegungen des Wulstes mitmacht, woraus eine geringe Beanspruchung der Klebezone resultiert. Weitere wirtschaftliche Vorteile sind dadurch gegeben, daß der Auswuchtgummi als endloser Profilstrang gespritzt werden kann und daß das spezifische Gewicht und der Querschnitt des Profils so gestaltet werden können, daß die Länge des Ausgleichsgewichts ein Maß für sein Gewicht darstellt.

Das Ausgleichsgwicht kann entweder am Reifenwulst oder an einem Abdeckring oder an beiden befestigt sein. Die Befestigung kann mittels einer Klebefolie oder direkt mit einem handelsüblichen Kontaktkleber für Gummi erfolgen.

Nachfolgend wird ein Ausführungsbeispiel der Erfindung anhand einer Zeichnung erläutert.

Es zeigt

Fig. 1 ein Fahrzeugrad mit einem Ausgleichsgewicht am Reifenwulst in einem radialen Teilschnitt,

Fig. 2 einen Ausschnitt des Fahrzeugrads gemäß Fig. 1, jedoch mit einem Ausgleichsgewicht am Abdeckring,

Fig. 3 einen Ausschnitt des Fahrzeugrads gemäß Fig. 1, jedoch mit einem Ausgleichsgewicht, das den Reifenwulst und den Abdeckring überlappt.

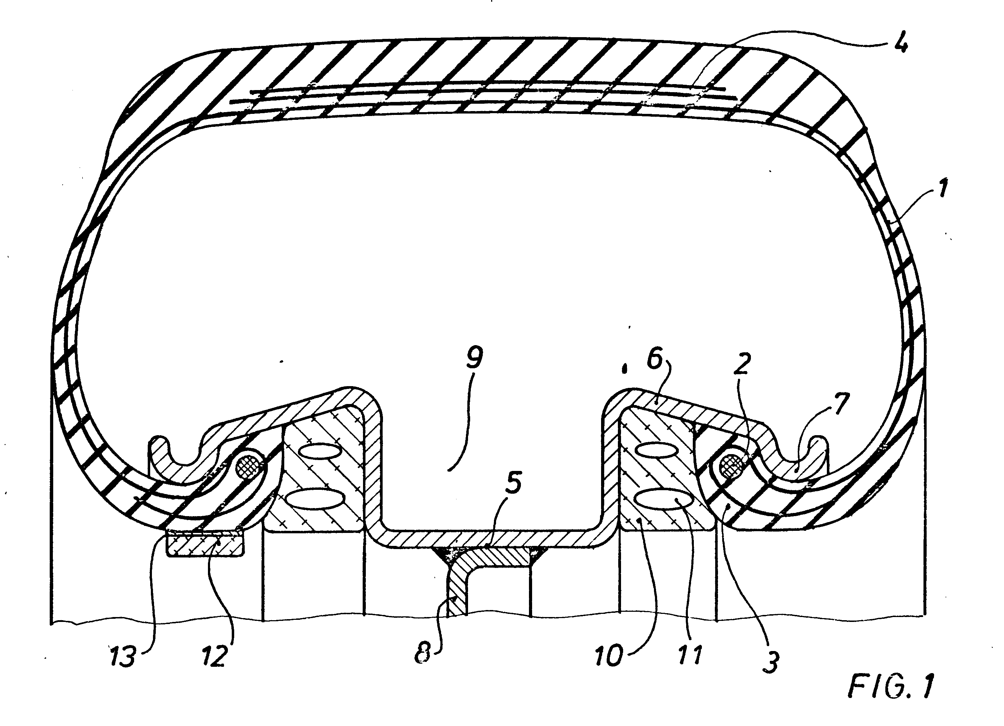

Beim Fahrzeugrad der Fig. 1 ist ein Gürtelreifen mit einer Radialkarkasse 1, die mit ihren Enden durch Umschlingen der Wulstkerne 2 in den Wülsten 3 verankert ist, und mit einem üblichen Gürtel 4 derart auf einer Felge 5 montiert, daß die Wulstsitzflächen sich auf radial innen vom Felgenkranz 6 gelegenen Sitzflächen neben den nach radial innen sich erstreckenden Felgenhörnern 7 befinden. Der Felgenkranz 6 ist an einer Felgenschüssel 8 befestigt. Die Räume zwischen den bei den Reifenwülsten 3, dem Felgenkranz 6 und den Wänden des Tiefbetts 9 werden von je einem Abdeckring 10 aus Gummi eingenommen, der zur Gewichtseinsparung Hohlräume 11 aufweisen kann.

Am Reifenwulst 3 befindet sich ein Ausgleichsgewicht 12 aus Gummi, das mittels einer Klebefolie 13 befestigt ist. Das Ausgleichsgewicht 12 sollte aus einem Gummi mit möglichst großem spezifischem Gewicht bestehen, damit das Volumen nicht zu groß wird. Das Ausgleichsgewicht 12 ist streifenförmig mit einem nahezu rechteckigen Querschnitt ausgebildet, und es paßt sich der Form der Reifenwulstfläche an.

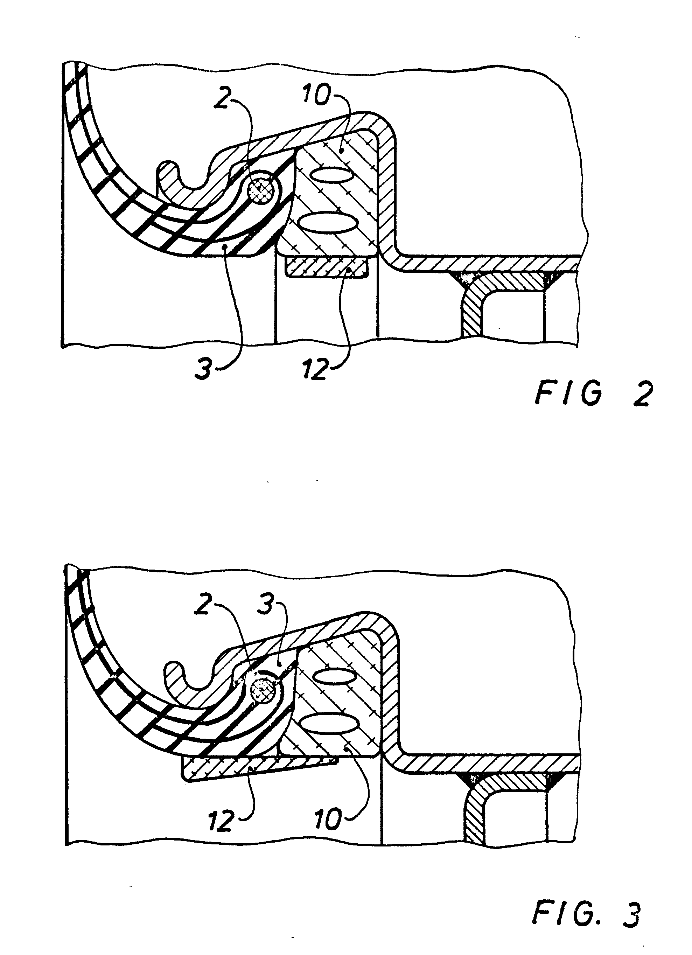

In Fig. 2 ist eine weitere Variante des Fahrzeugrads gemäß Fig. 1 dargestellt. Sie zeichnet sich dadurch aus, daß das Ausgleichsgewicht 12 statt am Reifenwulst 3 nunmehr am Abdeckring 10 befestigt ist, und zwar mit Hilfe eines handelsüblichen Kontaktklebers für Gummi, so daß sich eine Klebefolie 13 erübrigt. Selbstverständlich kann bei Bedarf auch eine Klebefolie 13 verwendet werden.

Das Beispiel der Fig. 3 zeigt ebenfalls einen Ausschnitt des Fahrzeugrads gemäß Fig. 1, jedoch befindet sich diesmal das Ausgleichsgewicht 12 überlappend am Reifenwulst 3 und am Abdeckring 10, so daß es an beiden befestigt ist. Das Ausgleichsgewicht 12 hat einen keilförmigen Querschnitt, wobei die Keilspitze nach axial innen weist, so daß sich am axial inneren Rand des Ausgleichsgewichts 12 kein Schmutz festsetzen kann.

Die Ausgleichsgewichte 12 in den vorstehend beschriebenen Beispielen werden zweckmäßigerweise aus einem endlosen Profilstrang aus Gummi hergestellt. Wenn man darauf achtet, daß der Profilstrang an jeder Stelle einen gleichen Querschnitt und gleiches spezifisches Gewicht aufweist, stellt die Länge eines Profilabschnitts ein Maß für das Gewicht des Ausgleichsgewichts dar. Durch Abschneiden bestimmter Längen kann man also Ausgleichsgewichte von z.B. 25 g, 50 g usw. erhalten.

Es sollte angemerkt werden, daß die Erfindung sich selbstverständlich auch auf solche Fahrzeugräder erstreckt, bei denen man auf die beschriebenen Abdeckringe verzichtet.

**Ansprüche**

1. Luftbereiftes Fahrzeugrad mit Ausgleichsgewicht, mit einer starren Felge, die im wesentlichen sich nach radial innen erstreckende Felgenhörner aufweist, und mit einem Fahrzeugluftreifen, der mit seinen Wülsten auf der radial inneren Seite der Felge neben den Felgenhörnern befestigt ist, weiterhin gegebenenfalls mit je einem Abdeckring, der den Raum axial innen von jedem Reifenwulst ausfüllt, dadurch gekennzeichnet, daß das Ausgleichsgewicht (12) aus Gummi besteht und daß es am Reifenwulst (3) und/oder am Abdeckring (10) befestigt ist.

2. Fahrzeugrad nach Anspruch 1, dadurch gekennzeichnet, daß das Ausgleichsgewicht (12) mittels einer Klebefolie (13) befestigt ist.

3. Fahrzeugrad nach Anspruch 1, dadurch gekennzeichnet, daß das Ausgleichsgewicht (12) mittels eines Kontaktklebers für Gummi befestigt ist.

4. Fahrzeugrad nach Anspruch 1, dadurch gekennzeichnet, daß das Ausgleichsgewicht (12) sich ausschließlich am Reifenwulst (3) befindet.

5. Fahrzeugrad nach Anspruch 1, dadurch gekennzeichnet, daß das Ausgleichsgewicht (12) sich überlappend am Reifenwulst (3) und am Abdeckring (10) befindet, daß es einen keilförmigen Querschnitt aufweist und daß die Spitze des Keils nach axial innen gerichtet ist.

6. Fahrzeugrad nach Anspruch 1, dadurch gekennzeichnet, daß das am Reifenwulst (3) und/oder am Abdeckring (10) befestigte Ausgleichsgewicht (12) von einem endlos gespritzten Profilstrang stammt.

7. Fahrzeugrad nach Anspruch 6, dadurch gekennzeichnet, daß die Länge des vom Profilstrang stammenden Ausgleichsgewichts (12) ein Maß für sein Gewicht darstellt.

FIG.1

Continental
Gummi-Werke AG
Hannover

0 212 460

85-55 P

FIG 2

FIG. 3

Continental
Gummi — Werke AG
Hannover

85- 55 P